# EUROPÄISCHE PATENTSCHRIFT

(11) **EP 4 624 892 B1**
(45) Veröffentlichungstag und Bekanntmachung des Hinweises auf die Patenterteilung: **02.09.2026**
(21) Anmeldenummer: 24165922.6
(22) Anmeldetag: 25.03.2024
(51) Int. Cl.: G01M 99/00, G06F 30/27, G06N 7/00, G01M 7/00, G06N 20/00, G05B 23/02

(54) **COMPUTER-IMPLEMENTIERTES VERFAHREN UND ZUSTANDSÜBERWACHUNGSVORRICHTUNG ZUR ERKENNUNG EINES MECHANISCHEN SCHADENS EINER MASCHINE**
COMPUTER-IMPLEMENTED METHOD AND CONDITION MONITORING DEVICE FOR DETECTING MECHANICAL DAMAGE TO A MACHINE
PROCÉDÉ MIS EN UVRE PAR ORDINATEUR ET DISPOSITIF DE SURVEILLANCE D'ÉTAT POUR DÉTECTER UN DOMMAGE MÉCANIQUE D'UNE MACHINE

(43) Veröffentlichungstag der Anmeldung: 01.10.2025
(73) Patentinhaber: Siemens Aktiengesellschaft, 80333 München (DE)
(72) Erfinder: RIESKAMP, Timo, 80634 München (DE); BRÜCKEL, Martin, 91052 Erlangen (DE); SENTURK, Sibel, 34000 Kadiköy (TR)
(74) Vertreter: Siemens Patent Attorneys

(56) Entgegenhaltungen:
- DE-A1- 102021 213 112
- DE-A1- 102021 214 518
- LEE WO JAE ET AL: "Time to failure prediction of rotating machinery using dynamic feature extraction and gaussian process regression", THE INTERNATIONAL JOURNAL OF ADVANCED MANUFACTURING TECHNOLOGY, SPRINGER, LONDON, vol. 130, no. 5-6, 27 December 2023 (2023-12-27), pages 2939 - 2955, XP037951523, ISSN: 0268-3768, [retrieved on 20231227], DOI: 10.1007/S00170-023-12799-8

## Beschreibung

Die vorliegende Erfindung betrifft Computer-implementiertes Verfahren zur Erkennung eines mechanischen Schadens einer Maschine basierend auf einer bei einer Rotationsgeschwindigkeit der Maschine vorliegenden Leistungskennzahl, eine Zustandsüberwachungsvorrichtung, die das Verfahren ausführt und ein entsprechendes Computerprogrammprodukt.

Ein Zustandsüberwachungssystem wird eingesetzt, um den Zustand von Maschinen und Anlagen zu überwachen und frühzeitig potenzielle Probleme zu erkennen. Auf Basis von historischen Sensordaten wie Temperatur oder Vibration der Maschine oder Anlage werden durch Datenanalyseverfahren Abweichungen von einem "Normalzustand" detektiert und bei Bedarf Aktionen eingeleitet. Durch die frühzeitige Erkennung dieser Abweichungen vom Normalzustand können Wartungszyklen optimiert und ungeplante Ausfallzeiten vermieden werden.

Eine große Herausforderung ist dabei das Erlernen dieses "Normalzustandes" der Maschine. Des Weiteren ist eine schnelle Inbetriebnahme gewünscht, d.h. das Zustandsüberwachungssystem sollte nach möglichst kurzer Kalibrierzeit in der Lage sein, Abweichungen vom Normalzustand der Maschine zu detektieren. Dies setzt aus Systemsicht allerdings voraus, dass ausreichend Daten existieren, um einen "Normalzustand" in verschiedenen Zuständen der Maschine zu erlernen.

Bei der Zustandsüberwachung von Maschinen, insbesondere von Maschinen und ihrer industriellen Anwendung stellt die Vibration eine wichtige Messgröße dar, um mechanische Fehler wie Lagerschäden, Fehlausrichtungen von Achsen oder Unwuchten zu erkennen. In der Praxis werden häufig verschiedene Leistungskennzahlen, kurz KPls, aus hochauflösenden Vibrationsdaten abgeleitet, über einen längeren Zeitraum beobachtet und auf diesen zeitlichen Leistungskennlinien Algorithmen zur Trenderkennung und Anomalieerkennung angewendet.

Besonders Elektromotoren, die mit Hilfe eines Umrichters in verschiedenen Drehzahlbereichen betrieben werden, zeigen jedoch, unter anderem aufgrund von Resonanzeffekten, in verschiedenen Drehzahlbereichen ein sehr unterschiedliches Vibrationsverhalten, was die Vergleichbarkeit der abgeleiteten KPIs erschwert. Bei der Analyse von Leistungskennzahlen, die aus Vibrationsdaten abgeleitet wurden, muss also der Betriebspunkt des Motors berücksichtig werden. Dies setzt allerdings voraus, dass dem Zustandsüberwachungssystem im produktiven Betrieb genug historische Daten aus den unterschiedlichen Betriebspunkten des Motors zur Verfügung stehen, sodass eine Aussage über eine eventuelle Anomalie in einem bestimmten Drehzahlbereich getroffen werden kann. Dies kann insbesondere in einem Zeitraum direkt nach der Inbetriebnahme des Motors nicht garantiert werden kann.

Die Patentschrift DE 10 2021 214518 offenbart ein Verfahren zur Erkennung eines mechanischen Schadens einer Maschine, wobei das Verfahren die folgenden Schritte umfasst:
- Kontinuierliches Erfassen von Betriebsgrößen des Betriebs in der elektrischen Maschine;
- Ermitteln eines modellierten Temperaturwerts mithilfe eines Temperaturmodells, das mit einem datenbasierten Modell ausgebildet ist, abhängig von Verläufen der Betriebsgrößen;
- Erfassen eines Temperaturmesswerts für die Temperatur der Komponente mithilfe eines Temperatursensors;
- Bestimmen der Temperaturangabe abhängig von dem Temperaturmesswert und dem modellierten Temperaturwert.

Daher besteht eine Aufgabe der Erfindung darin, Vorhersagen für Leistungskennzahlen bereits nach kurzer Kalibrierzeit, d.h. basierend auf einer geringen Anzahl von historischen Daten, und in vertrauenswürdiger Weise bereitzustellen. Eine weitere Aufgabe besteht darin, Vorhersagen für Leistungskennzahlen in bisher nicht oder kaum beobachteten Betriebspunkten der Maschine zu ermitteln.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Computer-implementiertes Verfahren zur Erkennung eines mechanischen Schadens einer Maschine basierend auf einer von der Rotationsgeschwindigkeit der Maschine abhängigen Leistungskennzahl, umfassend die Schritte:
- Empfangen, während eines Kalibrierzeitraums, einer Anzahl von Kalibrierungs-Datenpunkte, die jeweils die Rotationsgeschwindigkeit der Maschine und einen der Rotationsgeschwindigkeit zugeordneten Leistungskennwert umfassen, und die aus Sensordaten der in einem oder mehreren Betriebspunkten betriebenen Maschine ermittelt wurden,
- Kalibrieren eines Al-basierten Gaußschen Prozessregressors durch Eingabe der im Kalibrierzeitraum empfangenen Kalibrierungs-Datenpunkte, und Ausgabe einer geschätzten Leistungskennlinie und einen jedem Wert der Leistungskennlinie zugeordneten Unsicherheitsbereich für alle Rotationsgeschwindigkeitswerte in einem vorgegebenen Rotationsgeschwindigkeitsbereich, die einen Normalzustand der Maschine angibt,
- Empfangen eines zu bewertenden Datenpunktes in einem Bewertungszeitraum nach dem Kalibrierzeitraum, und
- Vergleichen des Datenpunktes mit der geschätzten Leistungskennlinie, und
- Ausgeben einer Anomaliemeldung, wenn der zu bewertende Datenpunkt außerhalb mindestens eines vorgegebenen Grenzwerts, der abhängig von dem Unsicherheitsbereich des Leistungskennwertes ist, liegt.

In vorteilhafter Weise wird durch den Gaußschen Prozessregressor nicht nur eine Leistungskennlinie vorhergesagt, sondern auch eine Unsicherheit für jeden Leistungskennwert modelliert. Durch den Unsicherheitsbereich kann die Kalibrierzeit eines solchen Systems deutlich verringert werden, da somit nicht für alle Betriebspunkte ausreichend Datenpunkte vorliegen müssen. Jeder Datenpunkt, d.h. jeder Kalibrierungs-Datenpunkt als auch jeder zu bewertende Datenpunkt umfasst die Rotationsgeschwindigkeit und den bei der Rotationsgeschwindigkeit ermittelten Leistungskennwert. Durch den Unsicherheitsbereich kann die Vertrauenswürdigkeit für jeden zu bewertenden Datenpunkt eingeschätzt werden.

In einer vorteilhafte Ausführungsform umfasst der Gaußschen Prozessregressor ein statistisches Modell zur Regression und Vorhersage von Datenpunkten, das eine Kovarianzfunktion zum Modellieren einer Beziehung zwischen Eingabe- und Ausgabewerten umfasst, wobei Hyperparameter der Kovarianzfunktion durch das Kalibrieren eingestellt werden. Die Leistungskennlinie ist ein durch den Gaußschen Prozessregressor ermittelter Mittelwert, der Unsicherheitsbereich ist eine durch den Gaußschen Prozessregressor ermittelte Standardabweichung.

In einer vorteilhaften Ausführungsform wird die Distanz des zu bewertenden Datenpunktes vom Mittelwert berechnet und mit der Standardabweichung für den Datenpunkt auf der Leistungskennlinie verglichen.

In anderen Worten, es wird für jeden zu bewertenden Datenpunkt, also dem bei der Rotationsgeschwindigkeit ermittelten Leistungskennwert, der Abstand zum geschätzten Leistungskennwert auf der geschätzten Leistungskennline ermittelt und mit dem Unsicherheitsbereich verglichen. So wird für einen zu bewertenden Datenpunkt bei einer Rotationsgeschwindigkeit mit einem großem Unsicherheitsbereich eine falsche Anomaliemeldung verhindert.

In einer vorteilhaften Ausführungsform umfasst die Leistungskennlinie einen Leistungskennwert für alle Rotationsgeschwindigkeitswerte innerhalb eines vorgegebenen Rotationsgeschwindigkeitsbereichs.

Somit kann die Leistungskennlinie für all jene zu bewertenden Datenpunkte verwendet werden, deren Rotationsgeschwindigkeit im Rotationsgeschwindigkeitsbereich liegt.

In einer vorteilhaften Ausführungsform wird der Gaußschen Prozessregressor in vorgegebenen Zeitintervallen mit weiteren Datenpunkten nachkalibriert.

Die Leistungskennlinie und somit ein Nachkalibrieren des Gaußschen Prozessregressors muss lediglich zur Verbesserung der Genauigkeit durchgeführt werden. Das Verfahren ist somit optimiert in Bezug auf die Prozessorkapazität. Bei einer Auslagerung des Kalibrierprozesses auf einen abgesetzten Server kann die Auswertung der zu bewertenden Datenpunkte durch eine einfach strukturierte Vorrichtung in der Nähe der Maschine ausgeführt werden.

In vorteilhafter Weise wird während des Kalibrierzeitraums eine gegenüber dem Bewertungszeitraum erhöhte Anzahl von Datenpunkten pro Zeiteinheit empfangen.

Somit kann der Kalibrierzeitraum verkürzt bzw. die Anzahl der Kalibrierungsdaten für das Nachkalibrieren vergrößert und somit das Kalibrierergebnis verbessert werden, d.h. eine genauere Leistungskennlinie ausgegeben werden.

Bevorzugt werden Datenpunkte, die während des vorangegangenen Betriebszeitraums der Maschine empfangen wurden als neue Kalibrierungs-Datenpunkte verwendet.

In einer vorteilhaften Ausführungsform werden die Rotationsgeschwindigkeit von magnetischen Felddaten und der Leistungskennwert von Vibrationsdaten, die an der Maschine gemessenen werden, abgeleitet.

Somit ist ein physikalisch gesicherter Bezug zwischen den Werten der Datenpunkte und direkt an der Maschine gemessenen Maschinenparametern gegeben.

In einer vorteilhaften Ausführungsform wird eine Verschlimmerungsmeldung ausgegeben, wenn die Anzahl von Anomaliemeldungen für Datenpunkte, die innerhalb eines vorgegebenen Zeitraums empfangen wurden, einen vorgegebenen Grenzwert übersteigt.

Durch die Verschlimmerungsmeldung kann aktiv auf eine Verschlechtung des Zustands der Maschine hingewiesen werden. Bei mehreren vorgegebenen, insbesondere steigenden Grenzwerten können unterschiedliche Kritikalitätsstufen für die Maschine implementiert werden.

In einer vorteilhaften Ausführungsform wird die geschätzte Leistungskennlinie und der jedem Wert der Leistungskennlinie zugeordnete Unsicherheitsbereich sowie der zu bewertende Datenpunkt auf einer graphischen Nutzerschnittstelle ausgegeben.

Durch das Anzeigen des Zustands der Maschine und dessen Verhalten über den gesamten Rotationsgeschwindigkeitsbereich sowie optional über die Zeit erhält Wartungspersonal eine frühzeitige und umfangreiche Indikation für anstehende Gefahrensituation oder Wartungsarbeiten.

In einer vorteilhaften Ausführungsform ist der mechanische Schaden ein Lagerschaden oder eine Fehlausrichtung von Achsen der Maschine oder eine Unwucht der Maschine.

Durch die Anomaliemeldungen können die häufigsten Ursachen einer Degradation des Maschinenbetriebs erkannt werden.

Gemäß einem zweiten Aspekt betrifft die Erfindung eine Zustandsüberwachungsvorrichtung zur Erkennung eines mechanischen Schadens einer Maschine basierend auf einer bei einer Rotationsgeschwindigkeit der Maschine vorliegenden Leistungskennzahl umfassend mindestens einen Prozessor, der derart konfiguriert ist, um folgende Schritte auszuführen:
- Empfangen, während eines Kalibrierzeitraums, einer Anzahl von Kalibrierungs-Datenpunkten, die jeweils die Rotationsgeschwindigkeit der Maschine und einen der Rotationsgeschwindigkeit zugeordneten Leistungskennwert umfassen, und die aus Sensordaten der in einem oder mehreren Betriebspunkten betriebenen Maschine ermittelt wurden,
- Kalibrieren eines Al-basierten Gaußschen Prozessregressors durch Eingabe der im Kalibrierzeitraum empfangenen Kalibrierungs-Datenpunkte, und Ausgabe einer geschätzten Leistungskennlinie und ein jedem Wert der Leistungskennlinie zugeordneter Unsicherheitsbereich für alle Rotationsgeschwindigkeits-
   werte in einem vorgegebenen Rotationsgeschwindigkeitsbereich, die einen Normalzustand der Maschine angibt,
- Empfangen eines zu bewertenden Datenpunktes in einem Bewertungszeitraum nach dem Kalibrierzeitraum, und
- Vergleichen des Datenpunktes mit der geschätzten Leistungskennlinie, und
- Ausgeben einer Anomaliemeldung, wenn der zu bewertende Datenpunkt außerhalb mindestens eines vorgegebenen Grenzwerts, der abhängig von dem Unsicherheitsbereich des Leistungskennwertes ist, liegt.

Die beschriebene Zustandsüberwachungsvorrichtung ist in der Lage bereits mit relativ wenigen Datenpunkten eine robuste Anomaliedetektion durchzuführen und die Abhängigkeit von Leistungskennzahlen, kurz auch KPIs genannt, für einen Maschinenschaden von der Rotationsgeschwindigkeit ausreichend genau zu modellieren. Auch wenn die rotatorische Maschine, insbesondere der Motor, nach einer Kalibrierphase zu einem späteren Zeitpunkt in einem anderen Betriebszustand betrieben wird, kann eine Aussage getroffen werden, inwieweit es sich hierbei um eine Anomalie handelt.

Gemäß einem dritten Aspekt betrifft die Erfindung ein Computerprogrammprodukt, umfassend ein nicht flüchtiges computer-lesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine beispielhafte Darstellung von Datenpunkten aufgezeichnet an einer Maschine mit zwei Betriebspunkten in schematischer Darstellung,
- Fig. 2: ein Ausführungsbeispiel des erfindungsgemäßen Verfahrens zur Erkennung eines mechanischen Schadens einer Maschine in Form eines Flussdiagramms,
- Fig. 3: eine beispielhafte Ausführung einer geschätzte Leistungskennlinie mit Unsicherheitsbereich ermittelt durch das erfindungsgemäße Verfahren,
- Fig. 4: ein beispielhafter Ablauf des erfindungsgemäßen Verfahrens während eines Kalibrierungs- und eines Bewertungszeitraums in schematischer Darstellung, und
- Fig. 5: ein Ausführungsbeispiel der erfindungsgemäßen Zustandsüberwachungsvorrichtung in Blockdarstellung.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

Sofern es in der nachfolgenden Beschreibung nicht anders angegeben ist, beziehen sich die Begriffe "empfangen", "kalibrieren", "vergleichen", "ausgeben" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vor-liegen können, beispielsweise als elektrische Impulse.

Die Zustandsüberwachungsvorrichtung und darin enthaltene Komponenten, wie beispielsweise mindestens eine Datenschnittstelle, eine Regressoreinheit, einer Auswerteeinheit oder einer Ausgabeschnittstelle, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

### Detaillierte Beschreibung der Ausführungsbeispiele

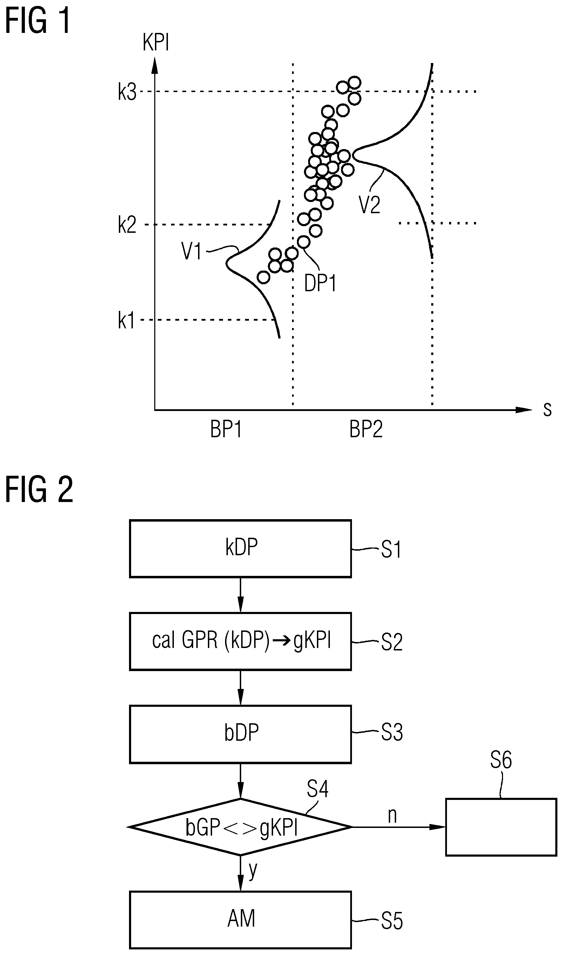

Bisherige Condition Monitoring Systeme setzen die aus Vibrationsdaten oder Motorstromdaten abgeleiteten Leistungskennzahlen, im Weiteren auch synonym als KPIs bezeichnet, entweder gar nicht in Bezug auf den aktuellen Betriebspunkt einer Maschine oder teilen beispielsweise die mögliche Bandbreite einer Rotationsgeschwindigkeit s in eine Anzahl fixer Betriebspunkte BP1, BP2 ein, wie in Fig.1 abgebildet. Dieses Vorgehen bringt allerdings Nachteile mit sich. Werden abgeleitete KPls, die beispielsweise ein Maß für die Ausprägung eines Motorschadens sein könnten, nicht in Bezug zum Betriebspunkt gesetzt, so ist eine eindeutige Trend- oder Anomalie Erkennung auf diese KPIs sehr schwierig, weil diese mit dem Betriebspunkt sehr stark schwanken könnten.

Eine Einteilung in einzelne, scharf voneinander getrennte Betriebspunkte BP1, BP2, wie in Fig.1 abgebildet, löst dieses Problem nur bedingt. Führt man beispielsweise eine AusreißerErkennung, auch als Outlierdetection bezeichnet, basierend auf Verteilungen V1, V2 von bisherigen Datenpunkten in den jeweiligen Betriebspunkten BP1, BP2 durch und definiert Schwellwerte k1, k2 bzw. k2, k3 für Datenpunkte, die außerhalb eines bestimmten Konfidenzintervalls liegen, so kann sich beispielsweise folgendes Problem ergeben: Obwohl die Abhängigkeit der Leistungskennzahl KPI von der Rotationsgeschwindigkeit s der Maschine ein annährend lineares und somit kein abnormales Verhalten zeigt, so sind die beiden abgeleiteten Verteilungen V1, V2 jedoch sehr unterschiedlich. Ein Datenpunkt DP1, der beispielsweise knapp rechts neben der Trennlinie der beiden Betriebspunkte BP1 und BP2 liegt, läge für den Betriebspunkt B1 in einem normalen Bereich, würde in Bezug auf den Betriebspunkt BP2 jedoch als Anomalie erkannt werden, da er weit außen von der Verteilung V2, hier unterhalb des Schwellwertes k2 liegt.

Die Einteilung in eine Reihe von Betriebspunkten BP1, B2 kann also nicht beliebig erfolgen bzw. könnte in einigen Fällen zu falsch positiven Detektionen führen. Da das spezifische Vibrationsverhalten über den Drehzahlbereich von Motor zu Motor sehr unterschiedlich sein kann und in der Praxis nicht im Detail bekannt ist, ist eine sinnvolle Wahl der Grenzwerte nicht möglich.

Bei der Analyse von Leistungskennzahlen, die aus Vibrationsdaten abgeleitet wurden, muss also der Betriebspunkt des Motors berücksichtig werden. Dies setzt allerdings voraus, dass einem datenbasierten, auf maschinellem Lernen basierten Zustandsüberwachungssystem im produktiven Betrieb genug historische Daten aus den unterschiedlichen Betriebspunkten des Motors zur Verfügung stehen, sodass eine Aussage über eine eventuelle Anomalie in einem bestimmten Drehzahlbereich getroffen werden kann. Dies kann insbesondere in einem Zeitraum direkt nach der Inbetriebnahme des Motors nicht garantiert werden.

Das vorgeschlagene Computer-implementierte Verfahren zur Erkennung eines mechanischen Schadens einer beispielsweise rotatorischen Maschine löst diese Aufgabe. Fig. 2 zeigt schematisch einen beispielhaften Ablauf des Verfahrens als Flussdiagramm.

Eine Grundidee des Verfahrens besteht darin, Leistungskennwerte, welche basierend auf Vibrationsdaten als Indikator für einen mechanischen Motorschaden dienen und stark drehzahlabhängig sind durch einen Gaußschen Prozessregressor zu modellieren. Im Einzelnen werden folgende Schritte durchgeführt:
Während eines Kalibrierzeitraums werden eine Anzahl von Kalibrierungs-Datenpunkte kDP, die jeweils die Rotationsgeschwindigkeit der Maschine und einen der Rotationsgeschwindigkeit zugeordneten Leistungskennwert umfassen, empfangen, siehe Schritt S1. Die Rotationsgeschwindigkeit wird dabei aus Sensordaten der in einem oder mehreren Betriebspunkten betriebenen Maschine ermittelt. Die Rotationsgeschwindigkeit wird aus magnetischen Felddaten und der Leistungskennwert wird aus Vibrationsdaten, die an der Maschine gemessenen werden, abgeleitet.

In Schritt S2, wird der Al-basierte Gaußsche Prozessregressor GPR durch Eingabe der im Kalibrierzeitraum empfangenen Kalibrierungs-Datenpunkte kDP kalibriert. Der kalibrierte Gaußsche Prozessregressor GPR liefert als Ausgabe eine geschätzte Leistungskennlinie gKPI und einen jedem Wert der Leistungskennlinie zugeordneten Unsicherheitsbereich für alle Rotationsgeschwindigkeitswerte in einem vorgegebenen Rotationsgeschwindigkeitsbereich. Diese geschätzte Leistungskennlinie gKPI gibt einen Normalzustand der Maschine an.

Damit ist die Kalibrierung des Gaußschen Prozessregressors GPR abgeschlossen und die geschätzte Leistungskennlinie gKPI kann für die Bewertung von Datenpunkten, die im Betrieb der Maschine aufgenommen wurden, eingesetzt werden. Entsprechend wird ein zu bewertender Datenpunkt bDP in einem Bewertungszeitraum nach dem Kalibrierzeitraum empfangen, siehe S3. Der Datenpunkt bDP wird mit der entsprechenden Leistungskennzahl der geschätzten Leistungskennlinie gKPI bei der Rotationsgeschwindigkeit des Datenpunktes bDP verglichen, siehe S4. Eine Anomaliemeldung AM wird ausgegeben, wenn der zu bewertende Datenpunkt bDP außerhalb mindestens eines vorgegebenen Grenzwerts liegt, wobei der mindestens eine Grenzwert abhängig von dem Unsicherheitsbereich des Leistungskennwertes ist, siehe S5.

Bevorzugt wird eine Anomaliemeldung AM ausgegeben, wenn der bewertete Datenpunkt bDP außerhalb des Unsicherheitsbereichs liegt, d.h. wenn der Leistungskennwert des Datenpunktes bDP größer als ein oberer, maximaler Leistungskennwert des Unsicherheitsbereichs ist bzw. wenn der Leistungskennwert des Datenpunktes kleiner als der untere, minimale Leistungskennwert des Unsicherheitsbereichs ist. Der Grenzwert kann auch innerhalb und/oder außerhalb des Unsicherheitsbereich festgesetzt werden.

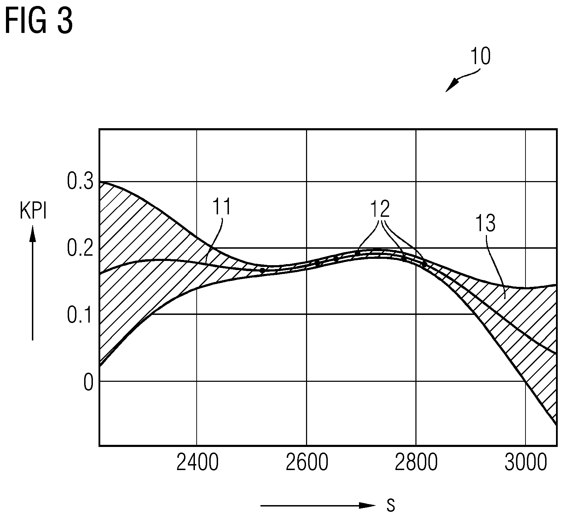

Liegt der zu bewertende Datenpunkt bDP innerhalb der vorgegebenen Grenzwerte so wird keine Anomaliemeldung ausgegeben, siehe Schritt S6. In diesem Fall kann optional eine "Normalzustandsmeldung" ausgegeben werden, die bestätigt, dass die Maschine innerhalb der in einem Normalzustand vorliegt. Dies ukann beispielsweise durch Ausgeben des bewerteten Datenpunktes in einem Leistungkennliniendiagramm, wie in Fig. 3 dargestellt werden.

Der Gaußsche Prozessregressor GDP umfasst ein statistisches Modell zur Regression und Vorhersage von Datenpunkten. Er verwendet eine Kovarianzfunktion, um eine Beziehung zwischen Eingabe- und Ausgabewerten zu modellieren. Die Hyperparameter der Kovarianzfunktion werden beim Kalibrieren anhand der empfangenen Kalibrierungs-Datenpunkte kDP geschätzt, um den Regressor anzupassen. Mit diesem Modell werden Vorhersagen für neue Eingabewerte berechnet, indem eine Wahrscheinlichkeitsverteilung über mögliche Ausgabewerte generiert wird. Der Gaußsche Prozessregressor GDP liefert auch eine Unsicherheitsabschätzung für seine Vorhersagen.

Im konkreten Fall liefert das Modell als Ergebnis unter anderem eine kontinuierliche Funktion, die die Abhängigkeit der Leistungskennwerte von der Rotationsgeschwindigkeit in einem vorgegebenen Rotationsgeschwindigkeitsbereich beschreibt und somit eine geschätzte Leistungskennlinie darstellt. Darüber hinaus liefert das Modell eine Aussage über die Unsicherheit in diesem Drehzahl- bzw. Rotationsgeschwindigkeitsbereich aus.

Fig. 3 zeigt ein Beispiel für eine geschätzt Leistungskennlinie 11 auf einem vorgegebenen Rotationsgeschwindigkeitsbereich, die einen Normalbetrieb einer Maschine kennzeichnet, und die von einem Gaußschen Prozessregressor basierend auf etwa zehn empfangene Kalibrierungs-Datenpunkte 12 ausgegeben wird.

Diagramm 10 zeigt die Leistungskennlinie 11, die die mit dem Gaußschen Prozessregressor modellierte Abhängigkeit zwischen Leistungskennwerten und Rotationsgeschwindigkeit s darstellt. Ein schraffierter Bereich zeigt ein Konfidenzintervall, beispielsweise ein 90% Konfidenzintervall, das den Unsicherheitsbereich 13 angibt. Das bedeutet, dass der Unsicherheitsbereich 13 den wahren Wert der Leistungskennzahl mit 90% Wahrscheinlichkeit enthält. Es ist zu erkennen, dass die Abhängigkeit nicht linear ist. In einem Rotationsgeschwindigkeitsbereich zwischen 2600 Umdrehungen pro Minute und 2700 Umdrehungen pro Minute ist zwar ein linearer Anstieg zu erkennen, im Bereich um 2800 Umdrehungen pro Minute hingegen nimmt der die Leistungskennzahl mit zunehmender Rotationsgeschwindigkeit wieder ab. Da die Streuung hier gering ist, ist die Unsicherheit des Verfahrens sehr gering und damit sensitiv gegenüber Ausreißern. In den Bereichen unterhalb von 2400 Umdrehungen pro Minute und über 2900 Umdrehungen pro Minute nimmt die Unsicherheit allerdings stark zu, da dort keine Kalibrierungs-Datenpunkte vorliegen, aus denen ein "Normalzustand" mit hoher Zuverlässigkeit abgeleitet werden könnte. Dennoch ist eine grobe Aussage möglich, da basierend auf den bisherigen Kalibrierungs-Datenpunkten 12 eine kontinuierliche Funktion, die die Leistungskennlinie 11 darstellt, erlernt wurde, die diese bestmöglich und unter Berücksichtigung der Unsicherheit des Verfahrens beschreibt.

Da mit Hilfe des Gaußprozesses diese Unsicherheit modelliert werden kann, kann die Kalibrierzeit eines solchen Verfahrens und einer Zustandsüberwachungsvorrichtung, die das Verfahren ausführt deutlich verringert werden, da es somit nicht zwingend notwendig ist, dass für alle Betriebspunkte der Maschine ausreichend Kalibrierungs-Datenpunkte vorliegen. Gleichzeitig ist das Verfahren robust gegenüber falsch positiven Anomaliedetektionen und entsprechend Anomaliemeldungen.

Vorzugsweise wird der Gaußschen Prozessregressor in vorgegebenen Zeitintervallen mit weiteren Datenpunkten, die zu einem späteren Zeitpunkt an der Maschine aufgezeichnet werden, nachkalibriert. Somit wird die Genauigkeit der resultierenden, neu geschätzten Leistungskennlinie und der Unsicherheitsbereich erhöht.

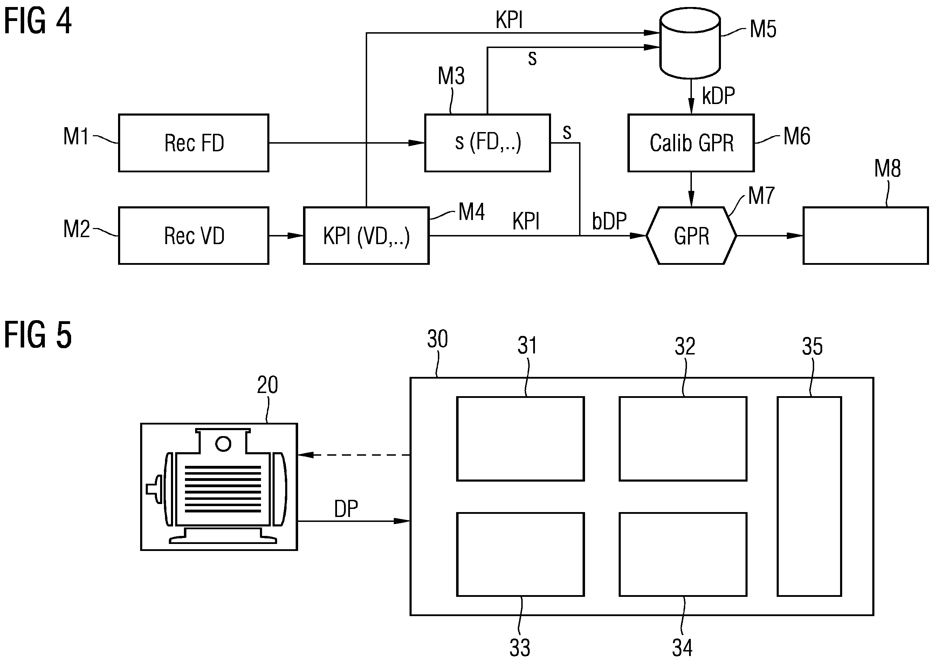

Fig. 4 zeigt ein Ausführungsbeispiel des Verfahrens mit Details zu einem Nachkalibrieren des Gaußschen Prozessregressors und einer daraus resultierenden nachkalibrierten geschätzten Leistungskennlinie.

Durch Sensorik an einer zu überwachenden Maschine werden in Zeitintervallen eines Kalibrierungszeitraums kurze, hochauflösende Schnappschüsse von Vibrationsdaten VD und magnetischen Felddaten FD sowie optional weitere Daten zur Berechnung der Drehzahl der Maschine aufgezeichnet, siehe M1, M2. In einem solchen hochauflösenden Schnappschuss werden eine Vielzahl von Vibrationsdaten VD und magnetischen Felddaten FD gemessen. Die Zeitintervalle können zyklisch, oder nach einem anderen beliebigen Schema vordefiniert sein oder abhängig von einem oder mehreren Ereignissen ausgelöst werden.

Aus den magnetischen Felddaten FD wird anschließend eine aktuelle Rotationsgeschwindigkeit s der Maschine zum Aufzeichnungszeitpunkt berechnet, siehe M3, und gespeichert, siehe M5. Aus den Vibrationsdaten VD werden mit Hilfe verschiedener Signalverarbeitungsmethoden Leistungskennwerte KPI berechnet, siehe M4, und diese ebenfalls, beispielsweise in einer Datenbank, gespeichert, siehe M5.

Beide Werte gekoppelt als Datenpunkt kDP, d.h. die Rotationsgeschwindigkeit s und der dazugehörende Leistungskennwerte KPI, dienen als Eingabe zum Kalibrieren für ein Gaußschen Prozess Regressor bzw. ein Regressormodell, siehe M6, welcher für die gegebene Rotationsgeschwindigkeit seine Gaußverteilung berechnet, die das "Normalverhalten" der Maschine in diesem Drehzahlbereich durch einen Mittelwert und eine Standardabweichung beschreibt. Der kalibrierte Gaußsche Prozessregressor GPR stellt nun dies Leistungskennlinie für die Zustandsüberwachung bereit, siehe M7.

Eine erste Anzahl von N Datenpunkte werden dabei genutzt, um das Regressormodell grundlegend zu kalibrieren. Anschließend werden Datenpunkte, die zu einem späteren Zeitpunkt aufgezeichnet werden zum Nachtrainieren genutzt. Bevorzugt werden Datenpunkte aus solchen Wertebereichen zum Nachtrainieren / nachkalibrieren genutzt, für die erst wenige Datenpunkte vorliegen. Beispielsweise kommen im laufenden Betrieb Daten aus einem sehr hohen Drehzahlbereich hinzu, in dem erst wenige Datenpunkte vorliegen und für den das Verhalten der Maschine somit bisher nur schlecht vorhergesagt werden kann. Die resultierende Leistungskennlinie umfasst einen Leistungskennwert für alle Rotationsgeschwindigkeitswerte innerhalb eines vorgegebenen Rotationsgeschwindigkeitsbereichs.

Anschließend bei der Zustandsüberwachung der Maschine, der als Bewertungszeitraum bezeichnet ist, siehe M8, wird ein neu zu bewertender Datenpunkt bDP mit dem Mittelwert in diesem Bereich verglichen. Dazu wird die Distanz des neu zu bewertender Datenpunktes bDP vom Mittelwert berechnet und diese mit dem Unsicherheitsbereich für diesen Punkt auf der Leistungskennlinie verglichen. Ist die Distanz größer als ein vorgegebener Grenzwert, beispielsweise ein n-faches der Standardabweichung, wird der neue zu bewertende Datenpunkt als Anomalie gekennzeichnet. Eine Anomalienachricht wird ausgegeben. Bevorzugt wird während des Kalibrierzeitraums eine gegenüber dem Bewertungszeitraum erhöhte Anzahl von Datenpunkten pro Zeiteinheit empfangen.

Zu bewertende Datenpunkte können auch als Kalibrierungs-Datenpunkte eingesetzt werden.

Bei sich entwickelnden mechanischen Schäden ist für die zu bewertenden Datenpunkte mit einem ansteigenden Trend der Leistungskennwerte zu rechnen. Neue zu bewertende Datenpunkte würden also in Richtung von höheren Leistungskennwerten driften. Da die Modellparameter des Gaußschen Prozessregressors nach einer Rekalibrierung für eine gewisse Zeit nicht verändert werden, würden die Distanzen zwischen neuen Leistungskennwerten und dem gelernten Mittelwert immer größer werden und nach einer Zeit einen vorher definierten Grenzwert der n-fachen Standardabweichung überschreiten. Durch eine Zunahme von detektierten Anomalien und entsprechenden Anomaliemeldungen kann ein derartiger Trend und damit eine Verschlimmerung eines mechanischen Fehlers detektiert werden. In einer Variante wird in diesem Fall vom Verfahren eine Warnung getriggert und eine Verschlimmerungsnachricht ausgeben.

Fig. 5 zeigt eine Zustandsüberwachungsvorrichtung 30 zur Erkennung eines mechanischen Schadens einer Maschine 20 basierend auf einer bei einer Rotationsgeschwindigkeit der Maschine vorliegenden Leistungskennzahl. Die Zustandsüberwachungsvorrichtung 30 umfasst mindestens einen Prozessor, der derart konfiguriert ist, eine
Kalibrierungsdatenschnittstelle 31, eine Regressoreinheit 32, ein Messdatenschnittstelle 33, eine Auswerteeinheit 34 sowie eine Ausgabeschnittstelle 35.

Die Maschine 20 ist eine rotatorische Maschine wie beispielsweise ein Motor, insbesondere ein elektrischer Motor. An der Maschine 20 angeordnete Sensoren detektieren die Feldstärke, und Vibration der Maschine. Aus den Sensordaten werden die Rotationsgeschwindigkeit und ein oder mehrere Leistungskennzahlen der Maschine abgeleitet, die ein Indikator für einen mechanischen Schaden sind. Über Leistungskennzahlen erkennbare mechanische Schäden sind beispielsweise ein Lagerschaden, eine Fehlausrichtung von Achsen der Maschine und/oder eine Unwucht der Maschine.

Die Kalibrierungsdatenschnittstelle 31 ist ausgebildet um während eines Kalibrierzeitraums eine Anzahl von Kalibrierungs-Datenpunkten zum Empfangen, die jeweils die Rotationsgeschwindigkeit der Maschine 20 und einen der Rotationsgeschwindigkeit zugeordneten Leistungskennwert umfassen, und die aus Sensordaten der in einem oder mehreren Betriebspunkten betriebenen Maschine ermittelt wurden. Das Ableiten der Rotationsgeschwindigkeit und der bei die Rotationsgeschwindigkeit vorliegende Leistungskennzahl aus den Sensordaten kann optional innerhalb der Zustandsüberwachungsvorrichtung 30 ausgeführt werden.

Die Regressoreinheit 32 ist ausgebildet, um einen Al-basierten Gaußschen Prozessregressor durch Eingabe der im Kalibrierzeitraum empfangenen Kalibrierungs-Datenpunkte zu kalibrieren und eine geschätzte Leistungskennlinie und ein jedem Wert der Leistungskennlinie zugeordneter Unsicherheitsbereich für alle Rotationsgeschwindigkeitswerte in einem vorgegebenen Rotationsgeschwindigkeitsbereich auszugeben, die einen Normalzustand der Maschine angibt.

Die Messdatenschnittstelle 33 ist ausgebildet, um einen zu bewertenden Datenpunkt in einem Bewertungszeitraum nach dem Kalibrierzeitraum zu bewerten.

Die Auswerteeinheit 34 ist ausgebildet, um Vergleichen den zu bewertenden Datenpunkt mit der geschätzten Leistungskennlinie zu vergleichen.

Die Ausgabeschnittstelle 35 ist ausgebildet, um eine Anomaliemeldung auszugeben, wenn der zu bewertende Datenpunkt außerhalb mindestens eines vorgegebenen Grenzwerts, der abhängig von dem Unsicherheitsbereich des Leistungskennwertes ist, liegt. Bevorzugt ist die Ausgabeschnittstelle 35 als eine graphischen Nutzerschnittstelle ausgebildet. Die geschätzte Leistungskennlinie und der jedem Wert der Leistungskennlinie zugeordnete Unsicherheitsbereich sowie der zu bewertende Datenpunkt werden auf der graphischen Nutzerschnittstelle ausgegeben.

Ein Computerprogrammprodukt, umfassend ein nicht flüchtiges computerlesbares Medium, das direkt in einen Speicher von mindestens einem digitalen Computer ladbar ist, und Programmcodeteile umfasst, die bei Ausführung der Programmcodeteile durch den mindestens einen digitalen Computer diesen veranlassen, die Schritte des oben beschriebenen Verfahrens durchzuführen und als Zustandsüberwachungsvorrichtung zu arbeiten.

Im Vergleich zu bisherigen Lösungen ist das beschriebene Zustandsüberwachungsvorrichtung 30 in der Lage bereits mit relativ wenigen Datenpunkten eine robuste Anomaliedetektion durchzuführen und die Abhängigkeit von Motorschadens-KPls von der Rotationsgeschwindigkeit ausreichend genau zu modellieren. Auch wenn der Motor nach der Kalibrierphase zu einem späteren Zeitpunkt in einem anderen Betriebszustand betrieben wird, kann eine Aussage getroffen werden, inwieweit es sich hierbei um eine Anomalie handelt. Mit zunehmender Anzahl von Datenpunkten kann das Verhalten der Maschine 20 mit der Zeit immer detaillierter modelliert werden, indem der Gaußschen Prozess Regressor in regelmäßigen Intervallen immer neu trainiert wird. Dieser Ansatz ermöglicht es, die Kalibrierzeit der Condition Monitoring Systems deutlich zu reduzieren, ohne dabei die Gefahr von Fehldetektionen signifikant zu erhöhen. Hierdurch kann die Leistungsfähigkeit eines Condition Monitoring Systems und damit Akzeptanz deutlich erhöht werden.

Die Aufgabe dieser Beschreibung besteht lediglich darin, veranschaulichende Beispiele bereitzustellen und weitere Vorteile und Besonderheiten dieser Erfindung anzugeben.

## Patentansprüche

1. Computer-implementiertes Verfahren zur Erkennung eines mechanischen Schadens einer Maschine (20) basierend auf einer bei einer Rotationsgeschwindigkeit der Maschine (20) vorliegenden Leistungskennzahl, umfassend die Schritte:
- Empfangen (S1), während eines Kalibrierzeitraums, einer Anzahl von Kalibrierungs-Datenpunkte (kDP), die jeweils die Rotationsgeschwindigkeit der Maschine (20) und einen der Rotationsgeschwindigkeit zugeordneten Leistungskennwert umfassen, und die aus Sensordaten der in einem oder mehreren Betriebspunkten betriebenen Maschine (20) ermittelt wurden,
- Kalibrieren (S2) eines Al-basierten Gaußschen Prozessregressors (GPR), durch Eingabe der im Kalibrierzeitraum empfangenen Kalibrierungs-Datenpunkte (kDP, 12) , und Ausgabe einer geschätzten Leistungskennlinie (gKPI, 11) und einen jedem Wert der Leistungskennlinie (gKPI, 11) zugeordneten Unsicherheitsbereich (13) für alle Rotationsgeschwindigkeitswerte in einem vorgegebenen Rotationsgeschwindigkeitsbereich, die einen Normalzustand der Maschine (20) angibt,
- Empfangen (S3) eines zu bewertenden Datenpunktes (bDP) in einem Bewertungszeitraum nach dem Kalibrierzeitraum, und
- Vergleichen (S4) des zu bewertenden Datenpunktes (bDP) mit der geschätzten Leistungskennlinie (gKPI, 11), und
- Ausgeben (S5) einer Anomaliemeldung (AM), wenn der zu bewertende Datenpunkt (bDP) außerhalb mindestens eines vorgegebenen Grenzwerts, der abhängig von dem Unsicherheitsbereich (13) des Leistungskennwertes ist, liegt.

2. Verfahren nach Anspruch 1, wobei der Gaußschen Prozessregressor (GPR) ein statistisches Modell zur Regression und Vorhersage von Datenpunkten umfasst, das eine Kovarianzfunktion zum Modellieren einer Beziehung zwischen Eingabe- und Ausgabewerten ist, wobei Hyperparameter der Kovarianzfunktion durch das Kalibrieren eingestellt werden.

3. Verfahren nach einem der vorangehenden Ansprüche, wobei die Leistungskennlinie (gKPI, 11) ein durch den Gaußschen Prozessregressor (GPR) ermittelter Mittelwert ist, und der Unsicherheitsbereich eine durch den Gaußschen Prozessregressor ermittelte Standardabweichung ist.

4. Verfahren nach Anspruch 3, wobei die Distanz des zu bewertenden Datenpunktes (bDP) vom Mittelwert berechnet und mit der Standardabweichung für den Datenpunkt (bDP) auf der geschätzten Leistungskennlinie (gKPI, 11) verglichen wird.

5. Verfahren nach einem der vorangehenden Ansprüche, wobei die Leistungskennlinie (gKPI, 11) einen Leistungskennwert für alle Rotationsgeschwindigkeitswerte innerhalb eines vorgegebenen Rotationsgeschwindigkeitsbereichs umfasst.

6. Verfahren nach einem der vorangehenden Ansprüche, wobei der Gaußschen Prozessregressor (GPR) in vorgegebenen Zeitintervallen mit weiteren Kalibrierungs-Datenpunkten (kDP) nachkalibriert wird.

7. Verfahren nach einem der vorangehenden Ansprüche, wobei
während des Kalibrierzeitraums eine gegenüber dem Bewertungszeitraum erhöhte Anzahl von Kalibrierunga-Datenpunkten (kDP) pro Zeiteinheit empfangen wird.

8. Verfahren nach einem der vorangehenden Ansprüche, wobei die Rotationsgeschwindigkeit aus magnetischen Felddaten und der Leistungskennwert aus Vibrationsdaten, die an der Maschine (20) gemessenen werden, abgeleitet werden.

9. Verfahren nach einem der vorangehenden Ansprüche, wobei eine Verschlimmerungsmeldung ausgegeben wird, wenn die Anzahl von Anomaliemeldungen (AM) für Datenpunkte (bDP), die innerhalb eines vorgegebenen Zeitraums empfangen wurden, einen vorgegebenen Grenzwert übersteigt.

10. Verfahren nach einem der vorangehenden Ansprüche, wobei die geschätzte Leistungskennlinie (gKPI, 11) und der jedem Wert der Leistungskennlinie (gKPI, 11) zugeordnete Unsicherheitsbereich (13) sowie der zu bewertende Datenpunkt (bDP) auf einer graphischen Nutzerschnittstelle ausgegeben wird.

11. Verfahren nach einem der vorangehenden Ansprüche, wobei der mechanische Schaden ein Lagerschaden oder eine Fehlausrichtung von Achsen der Maschine (20) oder eine Unwucht der Maschine (20) ist.

12. Zustandsüberwachungsvorrichtung (20) zur Erkennung eines mechanischen Schadens einer Maschine (20) basierend auf einer bei einer Rotationsgeschwindigkeit der Maschine (20) vorliegenden Leistungskennzahl, umfassend mindestens einen Prozessor, der derart konfiguriert ist, um folgende Schritte auszuführen:
- Empfangen (S1), während eines Kalibrierzeitraums, einer Anzahl von Kalibrierungs-Datenpunkte (kDP), die jeweils die Rotationsgeschwindigkeit der Maschine (20) und einen der Rotationsgeschwindigkeit zugeordneten Leistungskennwert umfassen, und die aus Sensordaten der in einem oder mehreren Betriebspunkten betriebenen Maschine (20) ermittelt wurden,
- Kalibrieren (S2) eines Al-basierten Gaußschen Prozessregressors (GPR), durch Eingabe der im Kalibrierzeitraum empfangenen Kalibrierungs-Datenpunkte (kDP, 12), und Ausgabe einer geschätzten Leistungskennlinie (gKPI, 11) und einen jedem Wert der Leistungskennlinie (gKPI, 11) zugeordneten Unsicherheitsbereich (13) für alle Rotationsgeschwindigkeitswerte in einem vorgegebenen Rotationsgeschwindigkeitsbereich, die einen Normalzustand der Maschine (20) angibt,
- Empfangen (S3) eines zu bewertenden Datenpunktes (bDP) in einem Bewertungszeitraum nach dem Kalibrierzeitraum, und
- Vergleichen (S4) des zu bewertenden Datenpunktes (bDP) mit der geschätzten Leistungskennlinie (gKPI, 11), und
- Ausgeben (S5) einer Anomaliemeldung (AM), wenn der zu bewertende Datenpunkt (bDP) außerhalb mindestens eines vorgegebenen Grenzwerts, der abhängig von dem Unsicherheitsbereich (13) des Leistungskennwertes ist, liegt.

13. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens gemäß einem der Ansprüche 1 bis 11 durchzuführen.

## Claims

1. Computer-implemented method for detecting mechanical damage to a machine (20) based on a performance indicator present at a rotation speed of the machine (20), comprising the steps of:
- receiving (S1) a number of calibration data points (kDP) during a calibration period, each comprising the rotation speed of the machine (20) and a performance characteristic value associated with the rotation speed and which have been determined from sensor data of the machine (20) operated at one or more operating points,
- calibrating (S2) an AI-based Gaussian process regressor (GPR), by inputting the calibration data points (kDP, 12) received during the calibration period and outputting an estimated performance curve (gKPI, 11) and an uncertainty range (13) assigned to each value of the performance curve (gKPI, 11) for all rotation speed values in a specified rotation speed range which indicate a normal state of the machine (20),
- receiving (S3) a data point to be evaluated (bDP) in an evaluation period after the calibration period, and
- comparing (S4) the data point to be evaluated (bDP) with the estimated performance curve (gKPI, 11), and
- outputting (S5) an anomaly message (AM) if the data point to be evaluated (bDP) is outside at least one specified limit value, which is dependent on the uncertainty range (13) of the performance characteristic value.

2. Method according to Claim 1, wherein the Gaussian process regressor (GPR) comprises a statistical model for the regression and prediction of data points, which is a covariance function for modelling a relationship between input and output values, wherein hyperparameters of the covariance function are adjusted by the calibration.

3. Method according to either of the preceding claims, wherein the performance curve (gKPI, 11) is a mean value determined by the Gaussian process regressor (GPR), and the uncertainty range is a standard deviation determined by the Gaussian process regressor.

4. Method according to Claim 3, wherein the distance of the data point to be evaluated (bDP) from the mean value is calculated and compared with the standard deviation for the data point (bDP) on the estimated performance curve (gKPI, 11).

5. Method according to any one of the preceding claims, wherein the performance curve (gKPI, 11) comprises a performance characteristic value for all rotation speed values within a specified rotation speed range.

6. Method according to any one of the preceding claims, wherein the Gaussian process regressor (GPR) is recalibrated at specified time intervals with further calibration data points (kDP) .

7. Method according to any one of the preceding claims, wherein an increased number of calibration data points (kDP) per time unit is received during the calibration period compared to the evaluation period.

8. Method according to any one of the preceding claims, wherein the rotation speed is derived from magnetic field data and the performance characteristic value is derived from vibration data, which are measured on the machine (20).

9. Method according to any one of the preceding claims, wherein a deterioration message is output when the number of anomaly messages (AM) for data points (bDP), which were received within a specified time period, exceeds a specified limit value.

10. Method according to any one of the preceding claims, wherein the estimated performance curve (gKPI, 11) and the uncertainty range (13) assigned to each value of the performance curve (gKPI, 11) as well as the data point to be evaluated (bDP) are output on a graphical user interface.

11. Method according to any one of the preceding claims, wherein the mechanical damage is a bearing damage or a misalignment of the axles of the machine (20) or an imbalance of the machine (20).

12. Condition monitoring device (20) for detecting mechanical damage to a machine (20) based on a performance indicator present at a rotation speed of the machine (20), comprising at least one processor configured to carry out the following steps:
- receiving (S1) a number of calibration data points (kDP) during a calibration period, each comprising the rotation speed of the machine (20) and a performance characteristic value associated with the rotation speed and which have been determined from sensor data of the machine (20) operated at one or more operating points,
- calibrating (S2) an AI-based Gaussian process regressor (GPR), by inputting the calibration data points (kDP, 12) received during the calibration period and outputting an estimated performance curve (gKPI, 11) and an uncertainty range (13) assigned to each value of the performance curve (gKPI, 11) for all rotation speed values in a specified rotation speed range which indicate a normal state of the machine (20),
- receiving (S3) a data point to be evaluated (bDP) in an evaluation period after the calibration period, and
- comparing (S4) the data point to be evaluated (bDP) with the estimated performance curve (gKPI, 11), and
- outputting (S5) an anomaly message (AM) if the data point to be evaluated (bDP) is outside at least one specified limit value, which is dependent on the uncertainty range (13) of the performance characteristic value.

13. Computer program product comprising a non-volatile computer-readable medium which can be loaded directly into a memory of at least one digital computer, comprising program code parts which, when the program code parts are executed by the at least one digital computer, cause the at least one digital computer to carry out the steps of the method according to any one of Claims 1 to 11.

## Revendications

1. Procédé mis en œuvre par ordinateur et permettant la détection d'un dommage mécanique d'une machine (20) en se basant sur un indicateur de performance valant pour une vitesse de rotation de la machine (20), comprenant les étapes consistant à :
- recevoir (S1), pendant une période d'étalonnage, un certain nombre de points de données d'étalonnage (kDP), qui comprennent respectivement la vitesse de rotation de la machine (20) et un indice de performance associé à la vitesse de rotation, et qui ont été déterminés à partir de données de capteur de la machine (20) pour un ou plusieurs régimes de son fonctionnement,
- étalonner (S2) un dispositif de régression gaussienne (GPR) basé sur l'IA, grâce à l'entrée des points de données d'étalonnage (kDP, 12) reçus pendant la période d'étalonnage et grâce à la sortie d'une courbe caractéristique de performance estimée (gKPI, 11) et d'une plage d'incertitude (13) associée à chaque valeur de la courbe caractéristique de performance (gKPI, 11) pour toutes les valeurs de vitesse de rotation dans une plage de vitesse de rotation prédéfinie, qui indique un état normal de la machine (20),
- recevoir (S3) un point de données à évaluer (bDP) dans une période d'évaluation succédant à la période d'étalonnage, et
- comparer (S4) le point de données à évaluer (bDP) avec la courbe caractéristique de performance estimée (gKPI, 11), et
- émettre (S5) un message d'anomalie (AM) si le point de données à évaluer (bDP) est en dehors d'au moins une valeur limite prédéfinie qui dépend de la plage d'incertitude (13) de l'indice de performance.

2. Procédé selon la revendication 1, dans lequel le dispositif de régression gaussienne (GPR) comprend un modèle statistique de régression et de prédiction de points de données qui est une fonction de covariance permettant de modéliser une relation entre des valeurs d'entrée et de sortie, dans lequel des hyperparamètres de la fonction de covariance sont ajustés grâce à l'étalonnage.

3. Procédé selon l'une quelconque des revendications précédentes, dans lequel la courbe caractéristique de performance (gKPI, 11) est une valeur moyenne déterminée par le dispositif de régression gaussienne (GPR), et la plage d'incertitude est un écart type déterminé grâce au dispositif de régression gaussienne.

4. Procédé selon la revendication 3, dans lequel la distance entre le point de données à évaluer (bDP) et la valeur moyenne est calculée et comparée à l'écart type pour le point de données (bDP) sur la courbe caractéristique de performance estimée (gKPI, 11).

5. Procédé selon l'une quelconque des revendications précédentes, dans lequel la courbe caractéristique de performance (gKPI, 11) comprend un indice de performance pour toutes les valeurs de vitesse de rotation à l'intérieur d'une plage de vitesse de rotation prédéfinie.

6. Procédé selon l'une quelconque des revendications précédentes, dans lequel le dispositif de régression gaussienne (GPR) est recalibré à des intervalles de temps prédéfinis avec d'autres points de données d'étalonnage (kDP).

7. Procédé selon l'une quelconque des revendications précédentes, dans lequel
pendant la période d'étalonnage, un nombre accru de points de données d'étalonnage (kDP) par unité de temps est reçu par rapport à la période d'évaluation.

8. Procédé selon l'une quelconque des revendications précédentes, dans lequel la vitesse de rotation est dérivée de données de champ magnétique et l'indice de performance est dérivé de données de vibration mesurées sur la machine (20).

9. Procédé selon l'une quelconque des revendications précédentes, dans lequel un message d'aggravation est émis lorsque le nombre de messages d'anomalies (AM) pour des points de données (bDP) reçus à l'intérieur d'une période de temps prédéfinie dépasse une valeur limite prédéfinie.

10. Procédé selon l'une quelconque des revendications précédentes, dans lequel la courbe caractéristique de performance estimée (gKPI, 11) et la plage d'incertitude (13) associée à chaque valeur de la courbe caractéristique de performance (gKPI, 11), ainsi que le point de données à évaluer (bDP), sont sortis sur une interface utilisateur graphique.

11. Procédé selon l'une quelconque des revendications précédentes, dans lequel le dommage mécanique est un dommage de palier ou un désalignement des axes de la machine (20) ou un balourd de la machine (20).

12. Dispositif de surveillance d'état (20) permettant de détecter un dommage mécanique d'une machine (20) en se basant sur un indicateur de performance valant pour une vitesse de rotation de la machine (20), comprenant au moins un processeur configuré de manière à mettre en œuvre les étapes ci-dessous :
- recevoir (S1), pendant une période d'étalonnage, un certain nombre de points de données d'étalonnage (kDP), qui comprennent respectivement la vitesse de rotation de la machine (20) et un indice de performance associé à la vitesse de rotation, et qui ont été déterminés à partir de données de capteur de la machine (20) pour un ou plusieurs régimes de son fonctionnement,
- étalonner (S2) un dispositif de régression gaussienne (GPR) basé sur l'IA, grâce à l'entrée des points de données d'étalonnage (kDP, 12) reçus pendant la période d'étalonnage et grâce à la sortie d'une courbe caractéristique de performance (gKPI, 11) estimée et d'une plage d'incertitude (13) associée à chaque valeur de la courbe caractéristique de performance (gKPI, 11) pour toutes les valeurs de vitesse de rotation dans une plage de vitesse de rotation prédéfinie, qui indique un état normal de la machine (20),
- recevoir (S3) un point de données à évaluer (bDP) dans une période d'évaluation succédant à la période d'étalonnage, et
- comparer (S4) le point de données à évaluer (bDP) avec la courbe caractéristique de performance estimée (gKPI, 11), et
- émettre (S5) un message d'anomalie (AM) si le point de données à évaluer (bDP) est en dehors d'au moins une valeur limite prédéfinie qui dépend de la plage d'incertitude (13) de l'indice de performance.

13. Produit de programme informatique, comprenant un moyen non volatil lisible par un ordinateur, pouvant être chargé directement dans une mémoire d'au moins un ordinateur numérique, comprenant des parties de code de programme qui, lorsqu'elles sont exécutées par le au moins un ordinateur numérique, amènent celui-ci à mettre en œuvre les étapes du procédé selon l'une quelconque des revendications 1 à 11.
